# EUROPÄISCHE PATENTSCHRIFT

(11) **EP 1 641 666 B1**
(45) Veröffentlichungstag und Bekanntmachung des Hinweises auf die Patenterteilung: **22.08.2007**
(21) Anmeldenummer: 04741695.3
(22) Anmeldetag: 02.06.2004
(51) Int. Cl.: B60T 8/36

(54) **HYDRAULIKAGGREGAT FÜR SCHLUPFGEREGELTE BREMSANLAGEN**
HYDRAULIC UNIT FOR SLIP-CONTROLLED BRAKING SYSTEMS
UNITE HYDRAULIQUE POUR SYSTEMES DE FREINAGE A REGULATION ANTIPATINAGE

(30) Priorität: 26.06.2003 DE 10328808; 29.08.2003 DE 10339882
(43) Veröffentlichungstag der Anmeldung: 05.04.2006
(73) Patentinhaber: Continental Teves AG & Co. oHG, 60488 Frankfurt (DE)
(72) Erfinder: DINKEL, Dieter, 65824 Schwalbach (DE); OTTO, Albrecht, 61137 Schöneck (DE); MAY, Gabriele, 63069 Offenbach (DE)
(86) Internationale Anmeldenummer: PCT/EP2004/050982
(87) Internationale Veröffentlichungsnummer: WO 2004/113142

(56) Entgegenhaltungen:
- WO-A-99/25594
- WO-A-99/50115
- DE-A- 10 145 540
- DE-A- 19 959 670

## Beschreibung

Die Erfindung betrifft ein Hydraulikaggregat für schlupfgeregelte Bremsanlagen nach dem Oberbegriff des Patentanspruchs 1.

Aus der WO 99/25594 ist bereits ein Hydraulikaggregat für eine schlupfgeregelte Bremsanlage bekannt geworden, mit einem blockförmigen Aufnahmekörper, der nebeneinander in einer ersten und zweiten Ventilreihe insgesamt acht Ventilaufnahmebohrungen beinhaltet, in denen elektromagnetisch betätigbare Einlass- und Auslassventile eingesetzt sind. Neben den beiden Ventilreihen befindet sich eine Pumpenaufnahmebohrung zwei parallele Speicheraufnahmebohrungen und eine dritte Ventilreihe, die in mehreren Ventilaufnahmebohrungen ausschließlich die für eine Antriebs- und Fahrstabilitätsregelung erforderlichen Trenn- und elektrischen Umschaltventile aufnimmt.

Diese Anordnung der Ventilreihen erfordert relativ lange Kanäle, um die seitlich zur ersten Ventilreihe angeordneten Bremsdruckgeberanschlüsse über die dritte Ventilreihe mit der Pumpenaufnahmebohrung zu verbinden.

Aus DE 199 59 670 A1 geht bereits ein Hydraulikaggregat der gattungsbildenden Art hervor, dessen Einlass-, Auslass-, Trenn- und Umschaltventile innerhalb eines Aufnahmekörpers in mehreren Ventilreihen angeordnet sind. Soweit aus den Ausführungsbeispielen hervor geht, mündet eine Pumpenbohrung außerhalb der Ventilreihen direkt neben einer in die Seitenfläche des Aufnahmekörpers gerichteten Speicheraufnahmebohrung in den Aufnahmekörper ein. Der Anschluss des Bremsdruckgebers an die Pumpenbohrung befindet sich infolge der gewählten Anordnung der für die Einlass-, Auslass-, Trenn- und Umschaltventile vorgesehenen Ventilaufnahmebohrungen weit von der Pumpenbohrung entfernt, wodurch sich ein langer Ansaugweg ergibt.

Daher ist es die Aufgabe der vorliegenden Erfindung, ein Hydraulikaggregat der angegebenen Art mit einfachen Mitteln derart zu verbessern, dass unter Beibehaltung eines möglichst kompakten Aufbaus vorgenannter Nachteil vermieden wird, mit dem Ziel einer saug- und geräuschoptimierten Ausführung des für die Pumpe erforderlichen Ansaugwegs.

Diese Aufgabe wird erfindungsgemäß für ein Hydraulikaggregat der eingangs genannten Gattung durch die kennzeichnenden

Merkmale des Patentanspruchs 1 gelöst.

Weitere Merkmale, Vorteile und Anwendungsmöglichkeiten der Erfindung gehen im Folgenden aus den Unteransprüchen und der Beschreibung eines Ausführungsbeispiels anhand von Zeichnungen hervor.

Es zeigen:
- Fig. 1: eine erste dreidimensionale Darstellung einer Gesamtansicht des Erfindungsgegenstandes mit einer Draufsicht auf die Ventilreihen in der ersten Gehäusefläche,
- Fig. 2: eine Perspektivdarstellung des Aufnahmekörpers nach Fig. 1 in einer um 180 Grad um die Pumpenachse gedrehten Ansicht zur Verdeutlichung aller Aufnahmebohrungen und Druckmittelkanäle im Aufnahmekörper,
- Fig. 3: eine Detailansicht aus Fig. 2 zur Erläuterung des Ansaugpfads der Pumpe zwischen der Speicheraufnahmebohrung und der dritten Ventilreihe,
- Fig. 4: eine Detailansicht aus Fig. 2 zur Erläuterung der Pumpendruckseite zwecks hydraulischer Verbindung der Pumpenaufnahmebohrung mit der ersten Ventilreihe,
- Fig. 5: eine weitere Detailansicht aus Fig. 2 zur Verdeutlichung der Kanalverbindung der Radbremskreise mit der ersten und zweiten Ventilreihe sowie der Drucksensorreihe,
- Figur 6: eine Teilansicht des Aufnahmekörpers nach Figur 2 mit einer Darstellung der zwischen der zweiten Ventilreihe über die Speicheraufnahmebohrungen zur ersten Ventilreihe bestehenden Raddruckkanäle,
- Figur 7: die räumliche Darstellung weiterer Führungs-, Fixier- und Leckagebohrungen im Aufnahmekörper.

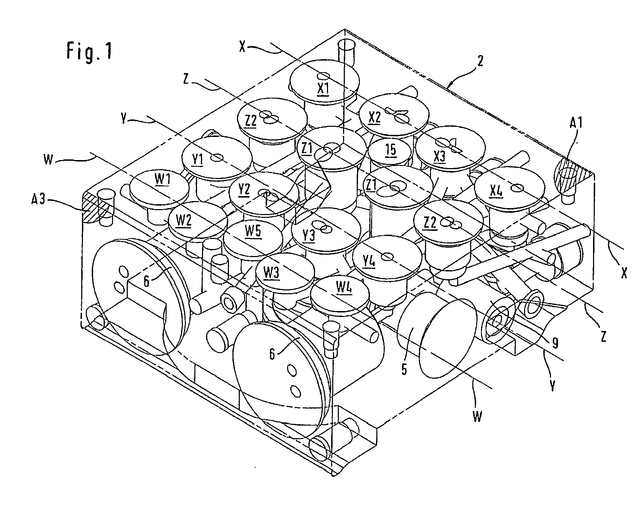

Die Figur 1 zeigt in Perspektivdarstellung ein Hydraulikaggregat für eine schlupfgeregelte, zweikreisige Kraftfahrzeug-Bremsanlage, mit einem blockförmigen Aufnahmekörper 2, der in jeweils vier Ventilaufnahmebohrungen X1-X4, Y1-Y4 einer ersten und zweiten Ventilreihe X, Y Ein- und Auslassventile aufnimmt, die als Sacklöcher in eine erste Gehäusefläche A1 des Aufnahmekörpers 2 bis zu einer ersten Gehäuseebene einmünden. Der blockförmige Aufnahmekörper 2 ist ferner in einer weiteren Gehäuseebene von zwei diametral ausgerichteten Pumpenaufnahmebohrungen 5 durchdrungen, die zur Aufnahme von zwei deaxierten Pumpkolben einen geringfügigen Achsenversatz aufweisen. Unabhängig davon, ob für eine nicht deaxierte Pumpe nur eine einzige Pumpenaufnahmebohrung 5 oder für die beispielhaft verwendete deaxierte Pumpe zwei Pumpenaufnahmebohrungen 5 im Aufnahmekörper 2 angeordnet sind, ist jede Pumpenaufnahmebohrung 5 quer zur Einmündungsrichtung der Ventilaufnahmebohrungen X1-X4, Y1-Y4 in den Aufnahmekörper 2 gerichtet. Obwohl die Pumpenaufnahmebohrung 5 aus der ersten Gehäuseebene der Ventilreihen X,Y,Z versetzt ist, befindet sie sich zwischen den vertikal zur ersten Gehäusefläche A1 ausgerichteten Achsen der Ventilaufnahmebohrungen Y1-Y4, Z1-Z4 der zweiten und dritten Ventilreihe Y, Z.

In den Aufnahmekörper 2 münden in eine dritte Gehäusefläche A3, die bevorzugt rechtwinklig zur ersten Gehäusefläche A1 gelegen ist, zwei parallel nebeneinander angeordnete Speicheraufnahmebohrungen 6 ein, die sich in Querlage zu den Ventilaufnahmebohrungen Y1-Y4 bis kurz vor die zweite Ventilreihe Y und die Pumpenaufnahmebohrungen 5 erstrecken. Die Tiefe der Speicheraufnahmebohrungen 6 ist folglich kleiner bemessen als der Horizontalabstand der zweiten Ventilreihe Y von der dritten Gehäusefläche A3, so dass die Verbindung der dritten Ventilreihe Y mit den Speicheraufnahmebohrungen 9 über besonders kurze Raddruckkanäle 7 erfolgt. In die Speicheraufnahmebohrungen 6 sind federbeaufschlagte Kolben eingesetzt, die mit Deckeln verschlossen sind.

In den Ventilaufnahmebohrungen Y1-Y4 der zweiten Ventilreihe Y sind elektromagnetisch betätigbare, in der Grundstellung stromlos geschlossene Auslassventile angeordnet. Die Ventilaufnahmebohrungen Y1-Y4 der zweiten Ventilreihe Y sind zwischen den beiden Speicheraufnahmebohrungen 6 und den Pumpenaufnahmebohrungen 5 besonders kompakt angeordnet.

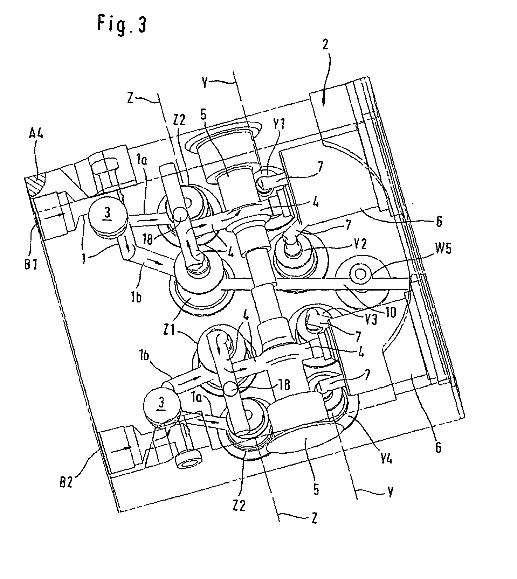

Kurz neben der zweiten Ventilreihe Y münden oberhalb der Speicheraufnahmebohrungen 6 fünf kurze Drucksensoraufnahmebohrungen W1-W5 einer Drucksensorreihe W in die erste Gehäusefläche A1 des Aufnahmekörpers 2 ein, wovon die den Radbremsdruck in allen vier Radbremsen erfassenden vier Drucksensoraufnahmebohrungen W1-W4 über vier Raddruckkanäle 12 mit den Ventilaufnahmebohrungen X1-X4 der ersten Ventilreihe X verbunden sind. Die zwischen den vier Drucksensoraufnahmebohrungen W1-W4 angeordnete fünfte Drucksensoraufnahmebohrung W5 steht zur Erfassung des Betätigungsdrucks im Druckkolbenkreis über einen Drucksensorkanal 10 sowie über die das Umschaltventil aufnehmenden Ventilaufnahmebohrung Z1 mit dem Bremsdruckgeberanschluss B1 (siehe auch Fig. 3) in Verbindung.

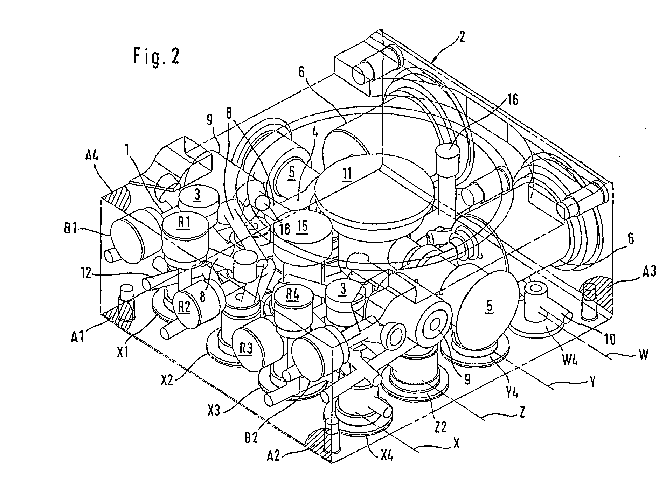

Wie aus Figur 2 deutlich wird, münden aufgrund der zweikreisigen Auslegung der Bremsanlage in der Nähe der Außenkanten des blockförmigen Aufnahmekörpers 2 in die zweite Gehäusefläche A2 zwei Bremsdruckgeberanschlüsse B1, B2 sowie die zwei Radbremsanschlüsse R2, R3 ein. Da es sich um eine Bremsanlage für ein mehrspuriges, an vier Rädern gebremstes Kraftfahrzeug handelt, befinden sich zwei weitere Radbremsanschlüsse R1, R4 montagefreundlich angeordnet auf der Oberseite des Aufnahmekörpers 2, die als Gehäusefläche A4 ausgewiesen ist.

Um eine hydraulische Verbindung zwischen einem Bremsdruckgeberanschluss B1 bzw. B2 und den Radbremsanschlüssen R1, R2 des ersten Bremskreises bzw. mit den Radbremsanschlüssen R3, R4 herzustellen, bedarf es mehrerer die Ventil-, Pumpen- und Speicheraufnahmebohrungen verbindender Kanäle, die ebenso wie die Ventil-, Speicher- und Pumpenaufnahmebohrungen im wesentlichen durch geschickte Bohroperationen innerhalb des Aufnahmekörpers 2 hergestellt sind.

Ferner ist gemäß Figur 2 in einem lotrechten Abstand zur ersten Gehäusefläche A1 eine Motoraufnahmebohrung 11 auf die Pumpenaufnahmebohrungen 5 gerichtet, die nicht nur zur Befestigung eines die Pumpkolben in der Pumpenaufnahmebohrung 5 betätigenden Elektromotors dient, sondern auch einen Kurbel- bzw. Exzenterantrieb beinhaltet. Folglich ist an der zur ersten Gehäusefläche A1 entgegengesetzten vierten Gehäusefläche A4 außer den für die Radbremsanschlüssen R1, R4 erforderlichen Bohrungen die Motoraufnahmebohrung 11 mittig angebracht.

Wie bereits aus Figur 1 ersichtlich ist, offenbart auch die Figur 3 die kurzen Sacklöcher der Ventilaufnahmebohrung Z1-Z4, Y1-Y4, wobei jeder Boden der Ventilaufnahmebohrungen Y1-Y4 mit jeweils einem zur Speicheraufnahmebohrung 6 führende Abschnitt eines Rücklaufkanals 7 verbunden ist. Zur Einhaltung einer äußerst kompakten Bauweise ist daher jeder Rücklaufkanal 7 als Winkelkanal seitlich zum kurzen Abschnitt des Ansaugkanals 4 angeordnet.

Um mit Blick auf die gestellte Aufgabe der Erfindung die Funktion des Aufnahmekörpers 2 möglichst optimal zu gestalten, ist die dritte Ventilreihe Z zwischen der ersten und zweiten Ventilreihe X, Y angeordnet. Die erste Ventilreihe X mündet unmittelbar neben den Bremsdruckgeber- und Radbremsanschlüssen B1, B2, R1-R4 in den Aufnahmekörper 2 ein, wobei die Anordnung der zweiten Ventilreihe Y zwischen der dritten Ventilreihe Z und der Speicheraufnahmebohrung 6 äußerst kurze Rücklaufkanäle 7 ermöglicht.

Zur Verdeutlichung der Konstruktion des Hydraulikaggregats sind nachfolgend anhand den Figuren 3 bis 7 wesentliche Merkmale der Blockverbohrung für die in der Figur 1 und 2 nur teilweise eindeutig zu erkennenden Bereiche des Aufnahmekörpers 2 herausgestellt und gesondert beschrieben.

Die Figur 3 zeigt, dass jeder Bremsdruckgeberanschluss B1, B2 über einen ersten Abschnitt 1a eines Zulaufkanals 1 mit der das Trennventil aufnehmenden Ventilaufnahmebohrung Z2 in der dritten Ventilreihe Z verbunden ist, der als Schrägkanal radial oder ggf. auch tangential in die Ventilaufnahmebohrung Z1 einmündet.

An jedem Zulaufkanal 1 ist zwischen dem Bremsdruckgeberanschluss B1, B2 und der dritten Ventilreihe Z eine Bohrung 3 für einen Pulsationsdämpfer angeschlossen, die in die zur ersten Gehäusefläche A1 gegenüberliegenden vierten Gehäusefläche A4 einmündet. Der erste Abschnitt 1a ist jeweils über den Zulaufkanal 1 mit einem zweiten Abschnitt 1b verbunden, der zu einer weiteren Ventilaufnahmebohrung Z1 in der dritten Ventilreihe Z führt, in die das elektrisch betätigbare Umschaltventil eingesetzt ist. Die Länge des relativ kurzen Zulaufkanals 1 und der am Zulaufkanal verzweigten Abschnitte 1a, 1b ist sowohl durch den kleinen Abstand der dritten Ventilreihe Z von der ersten Ventilreihe X als auch vom kleinen Abstand der ersten Ventilreihe X vom Bremsdruckgeberanschluss B1, B2 äußerst kompakt bauend, was zu einer zerspanungsarmen Fertigung des Hydraulikaggregats führt.

An der weiteren, das Umschaltventil aufnehmenden Ventilaufnahmebohrung Z1 der dritten Ventilreihe Z ist am Boden der Ventilaufnahmebohrung Z1 ein kurzer Ansaugkanal 4 angeschlossen, der zur Pumpenaufnahmebohrung 5 führt. Die Länge des Ansaugkanals 4 ist vorteilhaft durch den sehr kleinen Abstand der dritten Ventilreihe Z von der Pumpenaufnahmebohrung 5 bestimmt. Der oberhalb der dritten Ventilreihe Z verlaufende Abschnitt des Ansaugkanals 4 ist parallel zur Einmündungsrichtung der Pumpenaufnahmebohrung 5 in die Seitenfläche des Aufnahmekörpers 2 gebohrt und zur Reduzierung des Aufnahmevolumens etwa auf der Höhe des die Pumpenaufnahmebohrung 5 durchdringenden zweiten Abschnitts des Ansaugkanals 4 möglichst tief verkugelt. Mittels des kugelförmigen Verschlusselements 18 wird außerdem ein hydraulischer Kurzschluss zwischen der Druckdämpfungskammer 9 und dem Ansaugkanal 4 vermieden, denn die Sackbohrung für den Ansaugkanal 4 erstreckt sich vorteilhaft durch die Sackbohrung der Druckdämpfungskammer 9, was die Zerspanung des Aufnahmekörpers 2 vereinfacht.

Der zweite Abschnitt des Ansaugkanals 4 führt mittels einer einzigen Bohroperation sowohl durch den Boden der Speicheraufnahmebohrung 6 als auch quer durch die Pumpenaufnahmebohrung 5. Der Ansaugkanal 4 durchquert somit jeweils den von den äußeren Enden der Pumpenaufnahmebohrung 5 abgewandte Bereich der Pumpe, der in der Nähe der Motoraufnahmebohrung 11 gelegen ist.

In dem Abschnitt des Ansaugkanals 4, der sich zwischen der Pumpenaufnahmebohrung 5 und der Speicheraufnahmebohrung 6 erstreckt, ist ein in der Richtung der Pumpenaufnahmebohrung 5 öffnendes Rückschlagventil eingesetzt.
Ferner münden für jeden Bremskreis neben dem Ansaugkanal 4 in den Boden der Speicheraufnahmebohrung 6 zwei kurze Rücklaufkanäle 7 ein, die nach unten abgewinkelt und mit zwei die Auslassventile in der zweiten Ventilreihe Y aufnehmenden Ventilaufnahmebohrungen Y2 verbunden sind.

Entsprechend der Darstellung nach Figur 3 sind die Ventilaufnahmebohrungen Y1, Y2 bzw. Y3, Y4 somit besonders kompakt unterhalb der Speicheraufnahmebohrung 6 im Aufnahmekörper 2 angeordnet. Die zweite Ventilreihe Y befindet sich somit in unmittelbarer Nähe zur Speicheraufnahmebohrung 6, so dass möglichst kurze Rücklaufkanäle 7 und kurze Ansaugkanäle 4 zu den Speicheraufnahmebohrungen 6 führen, wodurch sich die Evakuierung, die Befüllung und die Leistungsfähigkeit des Hydraulikaggregats nachhaltig verbessert.

Ferner geht aus Figur 3 die äußerst einfache Verbindung des Bremsdruckgeberanschlusses B1 mit der Drucksensoraufnahmebohrung W5 hervor, wozu der Drucksensorkanal 10 als Schrägkanal quer durch Drucksensoraufnahmebohrung W5 und zwischen den Ventilaufnahmebohrungen Y2, Y3 hindurch in die Ventilaufnahmebohrung Z1 führt, die über den Zulaufkanal 1 mit dem Bremsdruckgeberanschluss B1 verbunden ist.

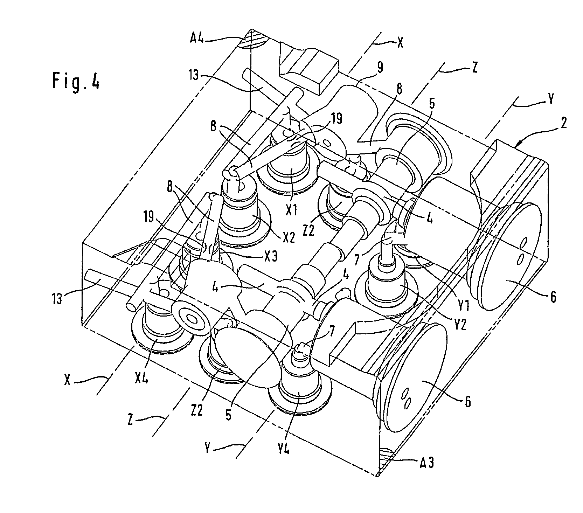

Die Figur 4 zeigt ergänzend zu Figur 3 die Kanalführung auf der Pumpendruckseite, wozu für jeden Bremskreis abseits des Ansaugkanals 4 in die Pumpenaufnahmebohrung 5 ein Druckkanal 8 radial oder tangential einmündet, der über eine Druckdämpfungskammer 9 an den die Einlassventile aufnehmenden Ventilaufnahmebohrungen X1, X2 bzw. X3, X4 der ersten Ventilreihe X und an die für das Trennventil vorgesehene Ventilaufnahmebohrung Z2 angeschlossen ist. Fertigungs- als auch strömungstechnisch äußerst günstig sind beide Druckdämpfungskammern 9 zwischen den Pumpenaufnahmebohrungen 5 und den Ventilaufnahmebohrungen X1-X4 der ersten Ventilreihe X im Aufnahmekörper 2 angeordnet. Die Druckdämpfungskammern 9 sind hierzu als Sackbohrungen parallel zu den Pumpenaufnahmebohrungen 5 angefertigt und am Boden der Sackbohrung zum Anschluß an die erste Ventilreihe X in Richtung der ersten Ventilreihe X durchbohrt. Zum Anschluss der für das Trennventil vorgesehenen Ventilaufnahmebohrung Z2 führt der Druckkanal 8 als Sackbohrung oberhalb den Böden der Ventilaufnahmebohrungen X1, X2, bzw. X3, X4 jeweils in Richtung der Achse der ersten Ventilreihe X zur Außenfläche des Aufnahmekörpers 2, in die auch die Pumpenaufnahmebohrung 5 und die Druckdämpfungskammer 9 einmünden und wird von einem Schrägkanal 13 geschnitten, der schließlich den Druckkanal 8 mit dem Boden der Ventilaufnahmebohrung Z2 verbindet.

Der zwischen der Pumpenaufnahmebohrung 5 und der Druckdämpfungskammer 9 erforderliche kurze Abschnitt des Druckkanals 8 ist durch eine Bohrung hergestellt, die durch eine in das äußere Ende der Pumpenaufnahmebohrung 5 schräg in Richtung der Druckdämpfungskammer 9 eingeführte Bohroperation die Wand der Pumpenaufnahmebohrung 5 durchdringt, so dass gleichzeitig mit dem Verschluss der Pumpenaufnahmebohrung 5 an der Außenfläche des Aufnahmekörpers 2 auch der Druckkanal 8 gegenüber der Atmosphäre verschlossen ist. Eine aufwendige separate Verkugelung des Druckkanals 8 entfällt.

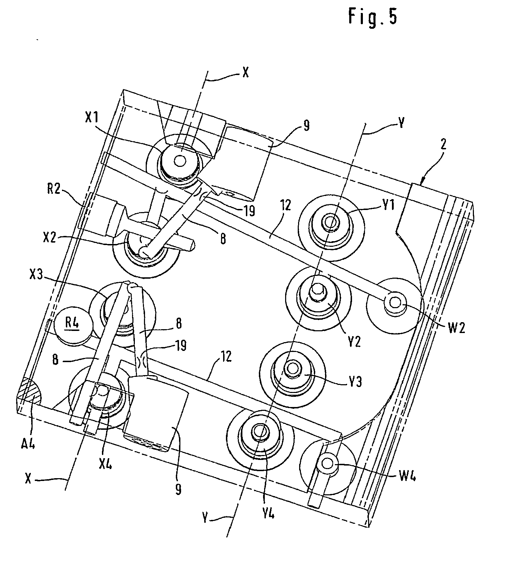

Die Figur 5 zeigt die Ventilaufnahmebohrungen Y1-Y4 und zwei von vier Raddruckkanälen 12, die als Sackbohrungen ausgehend von der zweiten Gehäusefläche A2 die erste Ventilreihe X und die zweite Ventilreihe Y bis zu den zugehörigen Drucksensoraufnahmebohrungen W2, W4 durchqueren. Die Raddruckkanäle 12 führen somit an der nicht abgebildeten dritten Ventilreihe Z vorbei zu den Wänden der Ventilaufnahmebohrungen X2 bzw.X4 und zu den Wänden der Ventilaufnahmebohrungen Y2 bzw. Y4 in der zweiten Ventilreihe Y und stehen abhängig von der Schaltstellung der Einlassventile mit den an den Böden der Ventilaufnahmebohrungen X2 bzw. X4 angeschlossenen Radbremsanschlüssen R2 bzw. R4 in Verbindung.

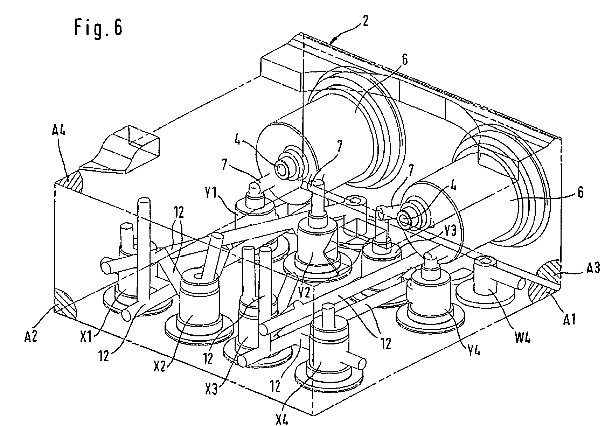

Die Figur 6 verdeutlicht schließlich die räumliche Anordnung aller vier für die Verbindung der Ventilaufnahmebohrungen X1-X4, Y1-Y4 erforderlichen Raddruckkanäle 12 im Aufnahmekörper 2, die zu den mittig in der Ventilreihe X liegenden Ventilaufnahmebohrungen X2, X3 abschnittsweise als Schrägkanäle von der ersten Gehäusefläche A1 in die Wände der Ventilaufnahmebohrungen X2, X3 einmünden oder zu den in der Ventilreihe X außenliegenden beiden Ventilaufnahmebohrungen X1 X4 abschnittsweise als Horizontalkanäle in die Wände der Ventilaufnahmebohrungen X1, X4 einmünden. Auch die Ventilaufnahmebohrungen Y2 bzw. Y3 stehen mittels seitlich schräg einmündenden Anschlüssen jeweils durch ein paar horizontal verlaufende Raddruckkanäle 12 mit den Ventilaufnahmebohrungen X2 bzw. X3 in Verbindung. An den Böden der Ventilaufnahmebohrungen Y1 bis Y4 sind die vier kurzen Rücklaufkanäle 7 als Winkelkanäle zu erkennen, die zu den Speicheraufnahmebohrungen 6 führen.

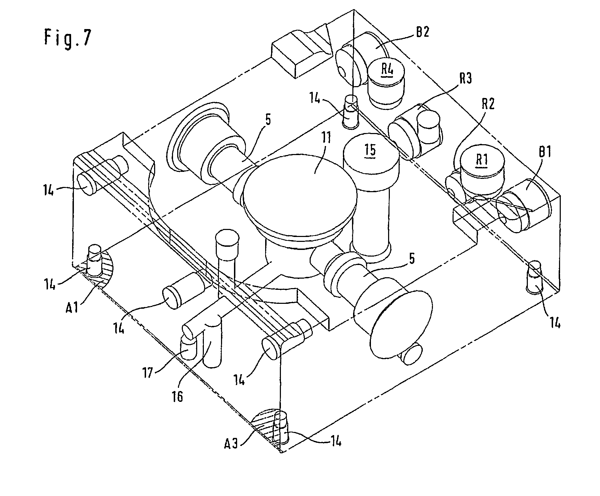

Schließlich verdeutlicht die Figur 7 die Lage der Befestigungsgewinde an der ersten und dritten Gehäusefläche A1, A3, um den Aufnahmekörper 2 einerseits an der ersten Gehäusefläche A1 mit einem die Ventile in den Ventilreihen X, Y, Z, und den Motor aktivierenden Steuergerät, andererseits aber auch den Aufnahmekörper 2 beispielsweise an seiner dritten Gehäusefläche A3 mit dem Fahrzeug verbinden zu können. Weiterhin durchquert ein Kabelkanal 15 parallel zur Motoraufnahmebohrung 11 den Aufnahmekörper 2, um durch den Kabelkanal 15 die elektrische Verbindung zwischen den diametral ausgerichteten Steuergerät und Elektromotor herstellen zu können. Die Motoraufnahmebohrung 11 weist überdies einen aus der ersten Gehäusefläche A1 hervorstehenden Leckagekanal 16 auf, um evtl. entstehende Pumpenleckage ableiten zu können. Schließlich besteht auch die Möglichkeit eine Zentrier- und/oder Codierelement 17 für das Steuergerät am Aufnahmekörper 2 vorzusehen, was sich gleichfalls an der ersten Gehäusefläche A1 befindet.

Zusammenfassend soll nunmehr die Funktionsweise des in seinen wesentlichen Elementen bereits beschriebenen Hydraulikaggregats für eine Kfz-Bremsanlage anhand einer Zusammenschau der Figuren 3 bis 6 erläutert werden:

Dem ersten Bremskreis ist der Bremsdruckgeberanschluss B1 zugeordnet (siehe Fig. 2, 3), der mittels des Zulaufkanals 1 über die das Trennventil aufnehmende Ventilaufnahmebohrung Z2 in der dritten Ventilreihe Z und anschließend über die gleich neben der dritten Ventilreihe Z angeordneten Ventilaufnahmebohrungen X1, X2 der ersten Ventilreihe X (siehe Fig. 4, 5) normalerweise an den Radbremsanschlüssen R1, R2 angeschlossen ist. Damit besteht im schlupffreien Bremsenbetrieb über das in Grundstellung offene Trennventil in der Ventilaufnahmebohrung Z2 eine ungehinderte Verbindung zu den in Grundstellung offenen Einlassventilen in den beiden Ventilaufnahmebohrungen X1 X2, die über die Kanalabschnitte der Raddruckkanäle 12 unmittelbar mit den Radbremsanschlüssen R1, R2 des ersten Bremskreises verbunden sind.

Zur Bremsschlupfregelung besteht beispielsweise für die am Radbremsanschluss R2 angeschlossene Radbremse (siehe Fig. 5) in einer Druckabbauphase innerhalb des ersten Bremskreises eine Druckmittelverbindung der Ventilaufnahmebohrungen X2 über den einen Abschnitt des Raddruckkanals 12 zu dem offen geschalteten Auslassventil in der Ventilaufnahmebohrung Y2, so dass von dort über die sich am Boden der Ventilaufnahmebohrung Y2 anschließenden Rücklaufkanal 7 (siehe Fig. 6) überschüssiges Bremsdruckvolumen in die erste Speicheraufnahmebohrung 7 des ersten Bremskreises gelangt, aus der zum Zweck des erneuten Bremsdruckaufbaus in der Radbremse R2 (siehe Fig. 4) das in der Speicheraufnahmebohrung 7 gespeicherte Druckmittel über den kurzen Abschnitt des Ansaugkanals 4 (und das darin befindliche Rückschlagventil) je Bremskreis von einem Pumpkolben in der zugehörigen Pumpenaufnahmebohrung 5 zum Druckkanal 8, zur Druckdämpfungskammer 9 und weiter über den zur ersten Ventilreihe X schräg verlaufenden Abschnitt des Druckkanals 8 zu der Ventilaufnahmebohrungen X2 gefördert wird, in der das Einlassventil zum erneuten Bremsdruckaufbau in der offenen Grundstellung verharrt. Da das Auslassventil der Ventilaufnahmebohrung Y2 sodann in Schließstellung verharrt, ist sodann ein Entweichen des Druckmittels aus der Ventilaufnahmebohrung X2 über die Ventilaufnahmebohrung Y2 in die Speicheraufnahmebohrung 6 verhindert. Soll aber der Radbremsdruck in der Radbremse R2 konstant gehalten werden, dann verharrt sowohl das der Radbremse R2 zugehörige Einlass- als auch Auslassventil in der Schließstellung.

In dem bereits beispielhaft beschriebenen ersten Bremskreis wird zur Fahrdynamikregelung das in der Ventilaufnahmebohrung Z2 der dritten Ventilreihe Z eingesetzte Trennventil elektromagnetisch geschlossen und das in der Ventilaufnahmebohrung Z1 angeordnete Umschaltventil geöffnet (siehe Fig. 3), so dass über den seitlich in die Ventilaufnahmebohrung Z1 einmündenden Zulaufkanal 1 des Bremsdruckgeberanschluss B1 Druckmittel durch die Bohrung 3 des Pulsationsdämpfers ausschließlich über den zweiten Abschnitt 1b des Zulaufkanals 1 zu einem am Boden der Ventilaufnahmebohrung Z1 angeordneten ersten Abschnitt des Ansaugkanals 4 gelangt, der somit auf kürzestem Weg eine direkte Verbindung zur Pumpenaufnahmebohrung 5 herstellt. Der in der Pumpenaufnahmebohrung 5 eingesetzte Pumpkolben fördert sodann über das in der Pumpenaufnahmebohrung 5 eingesetzte Pumpensaug- und Pumpendruckventil das über den ersten Abschnitt des Ansaugkanals 4 zuströmende Druckmittel in den Druckkanal 8 (siehe Fig. 4) und von dort über die Druckdämpfungskammer 9 und eine in den Druckkanal 8 eingesetzte Blende 19 zu den Ventilaufnahmebohrungen X1, X2, die je nach vorliegendem Druckregelzyklus entweder von den Einlassventilen in Richtung der Radbremsanschlüsse R1, R2 geöffnet oder verschlossen sind.

Auch wenn anstelle der Fahrdynamikregelung die Antriebsschlupfregelung einsetzt, bleibt das Trennventil in der Ventilaufnahmebohrung Z2 (siehe Fig. 3) innerhalb des zulässigen Systemdrucks geschlossen, so dass auf der Pumpendruckseite kein Druckmittel über das Trennventil zum Bremsdruckgeberanschluss B1 entweichen kann. Das Trennventil wird nur beim Überschreiten des zulässigen Systemdrucks hydraulisch zwangsgeöffnet.

Selbstverständlich ist die beispielhafte Beschreibung der Bremsdruckregelung nicht auf die Verbindung der Radbremse mit dem Radbremsanschluss R2 oder auf den zugehörigen Bremskreis beschränkt.

Aus der räumlichen Darstellung des erfindungsgemäßen Hydraulikaggregats geht hervor, dass zwischen den einzelnen Ventilreihen X, Y, Z mittels Gerad- und Schrägbohrungen ein strömungsoptimiertes Druckmittelkanalsystem geschaffen ist, das herstelltechnisch einfach zu realisieren ist.

Durch die gewählte Lage der dritten Ventilreihe Z ergibt sich vorteilhaft für jeden Bremskreis ein besonders kurzer, widerstandsarmer Ansaugkanal 4, der schnell und einfach zu entlüften sowie zu befüllen ist. Schnell und zuverlässig kann überdies durch die gewählte Anordnung der drei Ventilreihen X, Y, Z im Aufnahmekörper 2 das Druckmittel über den Bremsdruckgeberanschluss B1 bzw. B2 auf kürzestem Weg sowohl zur ersten Ventilreihe X als auch zur dritten Ventilreihe Z gelangen.

Bezüglich dem Aufbau und der Funktion der für den zweiten Bremskreis erforderlichen Elemente, die spiegelsymmetrisch zu den Elementen des ersten Bremskreises im Aufnahmekörper 2 angeordnet sind, gilt analog das bereits bisher zum ersten Bremskreis Beschriebene.

### Bezugszeichenliste

- 1: Zulaufkanal
- 1a: erster Abschnitt
- 1b: zweiter Abschnitt
- 2: Aufnahmekörper
- 3: Bohrung
- 4: Ansaugkanal
- 5: Pumpenaufnahmebohrung
- 6: Speicheraufnahmebohrung
- 7: Rücklaufkanal
- 8: Druckkanal
- 9: Druckdämpfungskammer
- 10: Druckspeicherkanal
- 11: Motoraufnahmebohrung
- 12: Raddruckkanal
- 13: Schrägkanal
- 14: Befestigungsgewinde
- 15: Kabelkanal
- 16: Leckagekanal
- 17: Zentrier-/ Codierelement
- 18: Verschlusselement
- 19: Blende
- X1: Ventilaufnahmebohrung
- X2: Ventilaufnahmebohrung
- X3: Ventilaufnahmebohrung
- X4: Ventilaufnahmebohrung
- Y1: Ventilaufnahmebohrung
- Y2: Ventilaufnahmebohrung
- Y3: Ventilaufnahmebohrung
- Y4: Ventilaufnahmebohrung
- Z1: Ventilaufnahmebohrung
- Z2: Ventilaufnahmebohrung
- Z3: Ventilaufnahmebohrung
- Z4: Ventilaufnahmebohrung
- W1: Drucksensoraufnahmebohrung
- W2: Drucksensoraufnahmebohrung
- W3: Drucksensoraufnahmebohrung
- W4: Drucksensoraufnahmebohrung
- W5: Drucksensoraufnahmebohrung
- X: Ventilreihe
- Y: Ventilreihe
- Z: Ventilreihe
- B1: Bremsdruckgeberanschluss
- B2: Bremsdruckgeberanschluss
- A1: Gehäusefläche
- A2: Gehäusefläche
- A3: Gehäusefläche
- A4: Gehäusefläche
- R1: Radbremsanschluss
- R2: Radbremsanschluss
- R3: Radbremsanschluss
- R4: Radbremsanschluss

## Patentansprüche

1. Hydraulikaggregat für schlupfgeregelte Bremsanlagen, mit einem Aufnahmekörper (2), in dessen erste Gehäusefläche (A1) mehrere Ventilaufnahmebohrungen (X1-X4, Y1-Y4, Z2) in mehreren Ventilreihen (X, Y, Z) einmünden, wobei in einer ersten Ventilreihe (X) mehrere Einlassventile, in einer zweiten Ventilreihe (Y) mehrere Auslassventile und in einer dritten Ventilreihe (Z) wenigstens ein in Grundstellung geöffnetes Trennventil angeordnet sind, mit einer zweiten Gehäusefläche (A2), in die wenigstens ein Bremsdruckgeber- und/oder ein Radbremsanschluss (B1, B2, R1-R4) einmündet, mit einer im Aufnahmekörper (2) angeordneten Pumpenaufnahmebohrung (5), die quer zur Einmündungsrichtung der Ventilaufnahmebohrungen (X1-X4, Y1-Y4, Z2) in den Aufnahmekörper (2) gerichtet ist, mit einer im Aufnahmekörper (2) angeordneten Motoraufnahmebohrung (11), die auf die Pumpenaufnahmebohrung (5) gerichtet ist, mit einer in den Aufnahmekörper (2) einmündenden Speicheraufnahmebohrung (6), die neben der die Auslassventile aufweisenden zweiten Ventilreihe (Y) angeordnet ist, sowie mit mehreren die Ventil-, Pumpen- und Speicheraufnahmebohrungen (X1-X4, Y1-Y4, Z2, 5, 6) verbindenden Kanälen, die eine hydraulische Verbindung zwischen dem Bremsdruckgeber- und dem Radbremsanschluss (B1, B2, R1-R4) herzustellen vermögen, wobei die dritte Ventilreihe (Z) zwischen der ersten und zweiten Ventilreihe (X, Y) angeordnet ist, **dadurch gekennzeichnet, dass** sich die Pumpenbohrung (5) zwischen den vertikal zur ersten Gehäusefläche (A1) ausgerichteten Achsen der Ventilaufnahmebohrungen (Y1-Y4, Z2) der zweiten und dritten Ventilreihe (Y, Z) befindet, und dass unmittelbar neben der ersten Ventilreihe (X) der Bremsdruckgeberanschluss (B1, B2) angeordnet ist, der über einen Zulaufkanal (1) sowohl mit der in der dritten Ventilreihe (Z) das Trennventil aufnehmenden Ventilaufnahmebohrung (Z2) als auch mit einer ein Umschaltventil in der dritten Ventilreihe (Z) aufnehmenden weiteren Ventilaufnahmebohrung (Z1) verbunden ist, die über einen kurzen Ansaugkanal (4) an der Pumpenbohrung (5) angeschlossen ist.

2. Hydraulikaggregat nach Anspruch 1, **dadurch gekennzeichnet, dass** die erste Ventilreihe (X) unmittelbar neben dem Radbremsanschluss (R1-R4) sowie die zweite Ventilreihe (Y) zwischen der dritten Ventilreihe (Z) und der Speicheraufnahmebohrung (6) in den Aufnahmekörper (2) einmündet.

3. Hydraulikaggregat nach Anspruch 1 oder 2, **dadurch gekennzeichnet, dass** der Bremsdruckgeberanschluss (B1, B2) über einen ersten Abschnitt (1a) des Zulaufkanals (1) mit der das Trennventil aufnehmenden Ventilaufnahmebohrung (Z2) der dritten Ventilreihe (Z) verbunden ist, der als Schrägkanal radial oder tangential in die Ventilaufnahmebohrung (Z2) einmündet.

4. Hydraulikaggregat nach einem der Ansprüche 1 bis 3, **dadurch gekennzeichnet, dass** zwischen dem Bremsdruckgeberanschluss (B1, B2) und der dritten Ventilreihe (Z) eine Bohrung (3) für einen Pulsationsdämpfer in den Aufnahmekörper (2) einmündet, die am Zulaufkanal (1) angeschlossen und entgegengesetzt zur ersten Gehäusefläche (A1) im Aufnahmekörper (2) ausgerichtet ist.

5. Hydraulikaggregat nach einem der vorangegangenen Ansprüche, **dadurch gekennzeichnet, dass** der Zulaufkanal (1) einen zweiten Abschnitt (1b) aufweist, der zur weiteren Ventilaufnahmebohrung (Z1) in der dritten Ventilreihe (Z) führt, in die das elektrisch betätigbares Umschaltventil eingesetzt ist.

6. Hydraulikaggregat nach Anspruch 5, **dadurch gekennzeichnet, dass** die Länge beider Abschnitte (1a, 1b) des Zulaufkanals (1) im Aufnahmekörper (2) durch den Abstand der dritten Ventilreihe (Z) vom Bremsdruckgeberanschluss (B1, B2) bestimmt ist.

7. Hydraulikaggregat nach Anspruch 1, **dadurch gekennzeichnet, dass** der Ansaugkanal (4) im Aufnahmekörper (2) als Winkelkanal zur Pumpenaufnahmebohrung (5) führt.

8. Hydraulikaggregat nach Anspruch 7, **dadurch gekennzeichnet, dass** die Länge des Ansaugkanals (4) durch den Abstand der dritten Ventilreihe (Z) von der Pumpenaufnahmebohrung (5) bestimmt ist.

9. Hydraulikaggregat nach Anspruch 7, **dadurch gekennzeichnet, dass** die Pumpenaufnahmebohrung (5) in Richtung auf die Speicheraufnahmebohrung (6) vom Ansaugkanal (4) durchdrungen ist, wobei der Ansaugkanal (4) in den Boden der Speicheraufnahmebohrung (6) einmündet.

10. Hydraulikaggregat nach Anspruch 9, **dadurch gekennzeichnet, dass** in dem Abschnitt des Ansaugkanals (4), der zwischen der Pumpenaufnahmebohrung (5) und der Speicheraufnahmebohrung (6) gelegen ist, ein in der Richtung der Pumpenaufnahmebohrung (5) öffnendes Rückschlagventil eingesetzt ist.

11. Hydraulikaggregat nach Anspruch 9, **dadurch gekennzeichnet, dass** in den Boden der Speicheraufnahmebohrung (6) ein Rücklaufkanal (7) einmündet, der wenigstens mit einer der die Auslassventile in der zweiten Ventilreihe (Y) aufnehmenden Ventilaufnahmebohrung (Y2) verbunden ist, die zwischen der Speicher- und Pumpenaufnahmebohrung (6, 5) in den Aufnahmekörper (2) einmündet.

12. Hydraulikaggregat nach einem der vorangegangenen Ansprüche, **dadurch gekennzeichnet, dass** abseits des Ansaugkanals (4) in die Pumpenaufnahmebohrung (5) ein Druckkanal (8) radial oder tangential einmündet, der über eine Druckdämpfungskammer (9) an den die Einlassventile aufnehmenden Ventilaufnahmebohrungen (X1, X2 bzw. X3, X4) der ersten Ventilreihe (X) angeschlossen ist, wozu die Druckdämpfungskammer (9) im Aufnahmekörper (2) zwischen der Pumpenaufnahmebohrung (5) und den Ventilaufnahmebohrungen (X1, X2 bzw. X3, X4) der ersten Ventilreihe (X) angeordnet ist.

13. Hydraulikaggregat nach einem der vorangegangenen Ansprüche, **dadurch gekennzeichnet, dass** neben der zweiten Ventilreihe (Y) mehrere Drucksensoraufnahmebohrungen (W1-W5) einer Drucksensorreihe (W) in die erste Gehäusefläche (A1) des Aufnahmekörpers (2) einmünden, die über mehrere an Raddruckkanälen (12) angeschlossene Drucksensorkanäle (10) mit den Ventilaufnahmebohrungen (X1-X4)der ersten Ventilreihe (X) und der das Umschaltventil aufnehmenden Ventilaufnahmebohrung (Z2) der dritten Ventilreihe (Z) verbunden sind.

## Claims

1. Hydraulic unit for slip-controlled brake systems, including an accommodating member (2), into the first housing surface (A1) of which several valve accommodating bores (X1-X4, Y1-Y4, Z2) in several valve rows (X, Y, Z) open, and several inlet valves are arranged in a first valve row (X), several outlet valves are arranged in a second valve row (Y), and at least one separating valve that is open in its initial position is arranged in a third valve row (Z), including a second housing surface (A2) into which open at least one brake pressure generator connection and/or one wheel brake connection (B1, B2, R1-R4), including a pump accommodating bore (5), which is arranged in the accommodating member (2) and points transversely to the direction the valve accommodating bores (X1-X4, Y1-Y4, Z2) open into the accommodating member (2), including a motor accommodating bore (11) arranged in the accommodating member (2) and pointing to the pump accommodating bore (5), including an accumulator accommodating bore (6) which opens into the accommodating member (2) and is arranged adjacent to the second valve row (Y) housing the outlet valves, as well as including several channels which connect the valve accommodating bores, the pump accommodating bores and the accumulator accommodating bores (X1-X4, Y1-Y4, Z2, 5, 6) and are able to establish a hydraulic connection between the brake pressure generator connection and the wheel brake connection (B1, B2, R1-R4), with the third valve row (Z) being arranged between the first and the second valve row (X, Y), **characterized in that** the pump bore (5) is placed between the axes of the valve accommodating bores (Y1-Y4, Z2) of the second and third valve row (Y, Z) being aligned vertically to the first housing surface (A1), and **in that** the brake pressure generator connection (B1, B2) is arranged directly adjacent to the first valve row (X) and is connected by way of a suction channel (1) both to the valve accommodating bore (Z2) that receives the separating valve in the third valve row (Z) and to an additional valve accommodating bore (Z1) that receives a change-over valve in the third valve row (Z) and is connected to the pump bore (5) by way of a short suction channel (4).

2. Hydraulic unit as claimed in claim 1,
**characterized in that** the first valve row (X) opens directly beside the wheel brake connection (R1-R4) into the accommodating member (2), while the second valve row (Y) opens between the third valve row (Z) and the accumulator accommodating bore (6) into the accommodating member (2).

3. Hydraulic unit as claimed in claim 1 or 2,
**characterized in that** the brake pressure generator connection (B1, B2) is connected by way of a first portion (1a) of the supply channel (1) to the valve accommodating bore (Z2) of the third valve row (Z) that accommodates the separating valve, opening as an oblique channel radially or tangentially into the valve accommodating bore (Z2).

4. Hydraulic unit as claimed in any one of claims 1 to 3,
**characterized in that** a bore (3) for a pulsation damper opens into the accommodating member (2) between the brake pressure generator connection (B1, B2) and the third valve row (Z), which bore is connected to the supply channel (1) and aligned opposite to the first housing surface (A1) in the accommodating member (2).

5. Hydraulic unit as claimed in any one of the preceding claims,
**characterized in that** the supply channel (1) has a second portion (1b) that leads to an additional valve accommodating bore (Z1) in the third valve row (Z), into which the electrically operable change-over valve is inserted.

6. Hydraulic unit as claimed in claim 5,
**characterized in that** the length of both portions (1a, 1b) of the supply channel (1) in the accommodating member (2) is defined by the distance of the third valve row (Z) from the brake pressure generator connection (B1, B2).

7. Hydraulic unit as claimed in claim 1,
**characterized in that** the suction channel (4) in the accommodating member (2) leads as an angular channel to the pump accommodating bore (5).

8. Hydraulic unit as claimed in claim 7,
**characterized in that** the length of the suction channel (4) is defined by the distance of the third valve row (Z) from the pump accommodating bore (5).

9. Hydraulic unit as claimed in claim 7,
**characterized in that** the pump accommodating bore (5) is penetrated by the suction channel (4) in the direction of the accumulator accommodating bore (6), and the suction channel (4) opens into the bottom of the accumulator accommodating bore (6).

10. Hydraulic unit as claimed in claim 9,
**characterized in that** a non-return valve that opens in the direction of the pump accommodating bore (5) is inserted into the portion of the suction channel (4), which is positioned between the pump accommodating bore (5) and the accumulator accommodating bore (6).

11. Hydraulic unit as claimed in claim 9,
**characterized in that** opening into the bottom of the accumulator accommodating bore (6) is a return channel (7), which is connected to at least one valve accommodating bore (Y2) accommodating the outlet valves in the second valve row (Y) and opening into the accommodating member (2) between the accumulator and pump accommodating bores (6, 5).

12. Hydraulic unit as claimed in any one of the preceding claims,
**characterized in that** remote from the suction channel (4), a pressure channel (8) opens radially or tangentially into the pump accommodating bore (5), the pressure channel being connected by way of a pressure damping chamber (9) to the valve accommodating bores (X1, X2 or X3, X4, respectively) of the first valve row (X), in which the inlet valves are received, for what purpose the pressure damping chamber (9) is arranged in the accommodating member (2) between the pump accommodating bore (5) and the valve accommodating bores (X1, X2 or X3, X4, respectively) of the first valve row (X).

13. Hydraulic unit as claimed in any one of the preceding claims,
**characterized in that** close to the second valve row (Y), several pressure sensor accommodating bores (W1-W5) of a pressure sensor row (W) open into the first housing surface (A1) of the accommodating member (2), which bores, by way of several pressure sensor channels (10) connected to wheel pressure channels (12), are connected to the valve accommodating bores (X1-X4) of the first valve row (X) and the valve accommodating bore (Z2) of the third valve row (Z) in which the change-over valve is received.

## Revendications

1. Groupe hydraulique pour systèmes de freinage à régulation du patinage, comportant un corps de réception (2) dans sa première surface de boîtier (A1) duquel plusieurs trous de réception de soupape (X1-X4, Y1-Y4, Z2) débouchent dans plusieurs rangées de soupapes (X, Y, Z), plusieurs soupapes d'admission étant disposées dans une première rangée de soupapes (X), plusieurs soupapes d'échappement dans une deuxième rangée de soupapes (X) et au moins une soupape de séparation, ouverte en position de base, étant disposée dans une troisième rangée de soupapes (Z), comportant une seconde surface de boîtier (A2) dans laquelle débouche au moins un raccord de transmetteur de pression de freinage et/ou un raccord de frein de roue (B1, B2, R1-R4), comportant un trou de réception de pompe (5) disposé dans le corps de réception (2) et qui est orienté transversalement à la direction d'embouchure des trous de réception de soupape (1-4, Y1-Y4, Z2) dans le corps de réception (2), comportant un trou de réception de moteur (11) disposé dans le corps de réception (2) et qui est orienté vers le trou de réception de pompe (5), comportant un trou de réception d'accumulateur (6) débouchant dans le corps de réception (2) et qui est disposé à côté de la deuxième rangée de soupapes (Y) comportant les soupapes d'échappement, et comportant aussi plusieurs canaux reliant les trous de réception de soupape, de pompe et d'accumulateur (X1-X4, Y1-Y4, Z2, 5, 6), lesquels permettent de réaliser une liaison hydraulique entre le raccord de transmetteur de pression de freinage et le raccord de frein de roue (B1, B2, R1-R4), la troisième rangée de soupapes (Z) étant disposée entre la première et la deuxième rangée de soupapes (X, Y), **caractérisé en ce que** le trou de pompe (5) se trouve entre les axes, orientés verticalement par rapport à la première surface de boîtier (A1) , des trous de réception de soupape (Y1-Y4, Z2), de la deuxième et de la troisième rangée de soupapes (Y, Z), et **en ce qu'**immédiatement à côté de la première rangée de soupapes (X) est disposé le raccord de transmetteur de pression de freinage (B1, B2) qui est relié, par un canal d'arrivée (1), aussi bien au trou de réception de soupape (Z2) recevant dans la troisième rangée de soupape (Z) la soupape de séparation, qu'à un autre trou de réception de soupape (Z1) recevant une soupape de commutation dans la troisième rangée de soupapes (Z), lequel est raccordé au trou de pompe (5) par un court canal d'aspiration (4).

2. Groupe hydraulique selon la revendication 1, **caractérisé en ce que** la première rangée de soupapes (X) débouche dans le corps de réception (2), directement à côté du raccord de frein de roue (R1-R4) ainsi que la deuxième rangée de soupapes (Y) entre la troisième rangée de soupapes (Z) et le trou de réception d'accumulateur (6).

3. Groupe hydraulique selon la revendication 1 ou 2, **caractérisé en ce que** le raccord de transmetteur de pression de freinage (B1, B2) est relié au trou de réception de soupape recevant la soupape de séparation de la troisième rangée de soupapes (Z), par un premier segment (1a) qui débouche, en tant que canal oblique, radialement ou tangentiellement dans le trou de réception de soupape (Z2).

4. Groupe hydraulique selon l'une des revendications 1 à 3, **caractérisé en ce qu'**entre le raccord de transmetteur de pression de freinage (B1, B2) et la troisième rangée de soupapes (Z), débouche dans le corps de réception (2) un trou (3) pour un amortisseur de pulsations, lequel est raccordé au canal d'arrivée (1) et est orienté en sens opposé à la première surface de boîtier (A1) dans le corps de réception (2).

5. Groupe hydraulique selon l'une des revendications précédentes, **caractérisé en ce que** le canal d'arrivée (1) comporte un second segment (1b) qui mène vers l'autre trou de réception de soupape (Z1) dans la troisième rangée de soupapes (Z), dans lequel est insérée la soupape de commutation à actionnement électrique.

6. Groupe hydraulique selon la revendication 5, **caractérisé en ce que** la longueur des deux segments (1a, 1b) du canal d'arrivée (1) dans le corps de réception (2) est déterminée par la distance entre la troisième rangée de soupapes (Z) et le raccord de transmetteur de pression de freinage (B1, B2).

7. Groupe hydraulique selon la revendication 1, **caractérisé en ce que** le canal d'aspiration (4) dans le corps de réception (2) mène en tant que canal angulaire au trou de réception de pompe (5).

8. Groupe hydraulique selon la revendication 7, **caractérisé en ce que** la longueur du canal d'aspiration (4) est déterminée par la distance entre la troisième rangée de soupapes (Z) et le trou de réception de pompe (5).

9. Groupe hydraulique selon la revendication 7, **caractérisé en ce que** le trou de réception de pompe (5) est traversé en direction du trou de réception d'accumulateur (6) par le canal d'aspiration (4), le canal d'aspiration (4) débouchant dans le fond du trou de réception d'accumulateur (6).

10. Groupe hydraulique selon la revendication 9, **caractérisé en ce que** dans le segment du canal d'aspiration (4), qui est situé entre le trou de réception de pompe (5) et le trou de réception d'accumulateur (6), est inséré un clapet anti-retour s'ouvrant en direction du trou de réception de pompe (5).

11. Groupe hydraulique selon la revendication 9, **caractérisé en ce que** dans le fond du trou de réception d'accumulateur (6) débouche un canal de retour (7) qui est relié au moins à un trou de réception de soupape (Y2) recevant les soupapes d'échappement dans la deuxième rangée de soupapes (Y), lequel trou de réception de soupape (Y2) débouche dans le corps de réception (2) entre le trou de réception d'accumulateur et le trou de réception de pompe (6, 5).

12. Groupe hydraulique selon l'une des revendications précédentes, **caractérisé en ce qu'**à côté du canal d'aspiration (4) débouche radialement ou tangentiellement dans le trou de réception de pompe (5) un canal de pression (8) qui est raccordé, par une chambre d'amortissement de pression (9), aux trous de réception de soupape (X1, X2, respectivement X3, X4) recevant les soupapes d'admission, de la première rangée de soupapes (X), la chambre d'amortissement de pression (9) étant disposée à cet effet dans le corps de réception (2) entre le trou de réception de pompe (5) et les trous de réception de soupape (X1, X2, respectivement X3, X4) de la première rangée de soupapes (X).

13. Groupe hydraulique selon l'une des revendications précédentes, **caractérisé en ce qu'**à côté de la deuxième rangée de soupapes (Y) débouchent dans la première surface de boîtier (A1) du corps de réception (2) plusieurs trous de réception de capteur de pression (W1-W5) d'une rangée de capteurs de pression (W), qui sont reliés, par plusieurs canaux de capteur de pression (10) raccordés à des canaux de pression de roue (12), aux trous de réception de soupape (X1-X4) de la première rangée de soupapes (X) et au trou de réception de soupape (Z2) recevant la soupape de commutation de la troisième rangée de soupapes (Z).
